# EUROPEAN PATENT SPECIFICATION

(11) **EP 3 492 963 B1**
(45) Date of publication and mention of the grant of the patent: **12.05.2021**
(21) Application number: 18814098.2
(22) Date of filing: 23.04.2018
(51) Int. Cl.: G02B 27/02, G03B 21/00, G03B 21/14, H04N 5/64, G02B 27/01, G02B 27/00

(54) **EYEGLASS-TYPE IMAGE DISPLAY DEVICE**
BRILLENARTIGE BILDANZEIGEVORRICHTUNG
DISPOSITIF D'AFFICHAGE D'IMAGE DE TYPE LUNETTES

(30) Priority: 08.06.2017 JP 2017113526
(43) Date of publication of application: 05.06.2019
(73) Proprietor: NTT Docomo, Inc., Tokyo 100-6150 (JP)
(72) Inventor: NAKANISHI, Mikiko, Tokyo 100-6150 (JP); TAKAHASHI, Kazuhiko, Tokyo 100-6150 (JP); ABURAKAWA, Yuji, Tokyo 100-6150 (JP)
(74) Representative: Viering, Jentschura & Partner mbB Patent- und Rechtsanwälte
(86) International application number: PCT/JP2018/016462
(87) International publication number: WO 2018/225408

(56) References cited:
- JP-A- 2008 046 253
- JP-A- 2016 072 936
- JP-A- 2017 009 720
- US-A- 5 557 353
- US-A1- 2003 184 868
- US-A1- 2004 108 971
- US-A1- 2012 257 282
- US-A1- 2014 145 913
- US-B2- 8 319 762
- JANNICK P. ROLLAND ET AL: "The past, present, and future of head-mounted display designs", PROCEEDINGS SPIE 7513, 2009 INTERNATIONAL CONFERENCE ON OPTICAL INSTRUMENTS AND TECHNOLOGY, vol. 5638, 8 November 2004 (2004-11-08), page 368, XP055601275, 1000 20th St. Bellingham WA 98225-6705 USA ISSN: 0277-786X, DOI: 10.1117/12.575697 ISBN: 978-1-5106-2781-9

## Description

### Technical Field

An aspect of the present invention relates to an eyeglass-type image display device.

### Background Art

Conventionality, eyeglass-type image display devices configured to display an image, such as a video, on a lens surface of eyeglasses are known (see, for example, Patent Literature 1). In the eyeglass-type image display device disclosed in Patent Literature 1, an image is projected in a direction perpendicular to a lens surface of the eyeglasses.

Distortion compensation in the image projected on a holographic mirror of a goggle-shaped head mounted displays is also known (see, for example, Patent Literature 2). In the goggle-shaped head mounted display of Patent Literature 2, a light source, reflector mirrors, biaxial scanning mirror, and lens with holographic mirror thereon are provided. The light source emits a laser beam to the reflector mirror, which is reflected to the biaxial scanning mirror. The biaxial scanning mirror scans the holographic mirror two-dimensionally with the laser beam reflected from reflector mirror, and deflects the laser beam scanned by the biaxial scanning mirror in the direction of the user's eye.

Aberration correction in the image projected on a holographic mirror of a head-mountable apparatus is further known (see, for example, Patent Literature 3). In the head-mountable apparatus of Patent Literature 3, an image generator, a second portion of the optical system, and holographic elements are provided. The second portion of the optical system includes a first lens element, a second lens element, a third lens element, a fourth lens element, a reflective element (mirror), a fifth lens element, and a sixth lens element. With the structure described above, the high incidence angles involved with holographic elements give rise to off-axis aberrations (e.g., astigmatism, geometric distortion, and keystoning). The main purpose of the components in the second portion of the optical system is stated to correct these aberrations.

Distortion correction in the projected images of high angle of incidence scanned laser systems is further known (see, for example, Patent Literature 4). In the high angle of incidence scanned laser systems of Patent Literature 4, a varied thickness optical element is implemented as a wedge and is attached to a layer of an exit pupil expander. By varying the thickness of varied thickness optical element across the width of the element (i.e., by varying the thickness of the wedge in this embodiment), it is stated that a designer can optimize varied thickness optical element for a particular system geometry and a particular amount of keystone distortion introduced by the high angle of incidence scanning engine.

It is further known that distortion of a virtual image within a head-up display may be minimized by adjusting the angle of an optical element within the light path of said display (see, for example, Patent Literature 5).

### Citation List

### Patent Literature

Patent Literature 1: Japanese Unexamined Patent Publication No. 2016-131270;
Patent Literature 2: United States Patent No. US 8,319,762 B2;
Patent Literature 3: United States Patent Application Publication No. US 2004/0108971 A1;
Patent Literature 4: United States Patent Application Publication No. US 2012/0257282 A1 ; and
Patent Literature 5: United States Patent Application Publication No. US 2014/0145913 A1.

### Summary of Invention

### Technical Problem

Here, to a lens surface of eyeglasses, for example, it is conceivable to obliquely project an image from a side of a temple of the eyeglasses. However, when an image is obliquely projected to a lens surface of the eyeglasses, a side close to the temple of the eyeglasses (an outer side) and a side close to the bridge of the eyeglasses (an inner side) have different optical path length, which causes distortion (trapezoidal distortion) to the image projected to the lens surface of the eyeglasses. In short, in a configuration where an image is obliquely projected to the lens surface of eyeglasses, displaying an image properly is difficult.

An aspect of the present invention has been made in view of the foregoing situation and it is an object of the present invention to display an image properly in a configuration where an image is obliquely projected to a lens surface of eyeglasses.

### Solution to Problem

An eyeglass-type image display device according to an aspect of the present invention is an eyeglass-type image display device configured to display an image on a lens surface of eyeglasses and includes an image light output unit configured to output image light including image information, a first optical member configured to receive the image light output indirectly from the image light output unit through a splitter and emit the image light in an inverted trapezoidal shape, and a second optical member configured to: receive the image light emitted from the first optical member and project the image light in a direction oblique to the lens surface. The first optical member is a single optical member, wherein an incident plane of the first optical member is arranged to be inclined to the lens surface so as to suppress distortion of an image on the lens surface caused by the image light projected in the direction oblique to the lens surface from the second optical member. The first optical member is arranged such that the incident plane is inclined to the lens surface so that image light having a longer distance from the second optical member to the lens surface has a shorter distance from the image light output unit to the incident plane. The first optical member comprises a reflective screen for reflecting the image light output from the image light output unit toward the splitter wherein the splitter reflects the image light from the first optical member to a mirror, wherein the second optical member comprises the splitter and the mirror.

In the eyeglass-type image display device according to an aspect of the present invention, image light is projected in a direction oblique to the lens surface of the eyeglasses from the second optical member. When an image is obliquely projected to the lens surface of the eyeglasses, a problem arises in that distortion (trapezoidal distortion) is caused to the image projected to the lens surface. In this respect, in the eyeglass-type image display device according to an aspect of the present invention, the first optical member is configured to emit image light output from the image light output unit toward the second optical member, and the first optical member is arranged to be inclined to the lens surface in a direction for suppressing the aforementioned trapezoidal distortion. In short, the first optical member is arranged to be inclined such that the image is formed into an inverted trapezoid (a trapezoid in which the long side of the trapezoidal distortion is inversed to the short side), to suppress trapezoidal distortion. As such, before the second optical member receives image light, the first optical member forms an image to suppress trapezoidal distortion, and thus the distortion of the image on a lens surface is suppressed and the image can be displayed properly on the lens surface.

### Advantageous Effects of Invention

According to an aspect of the present invention, in a configuration where an image is obliquely projected to a lens surface of eyeglasses, the image can be properly displayed.

### Brief Description of Drawings

FIG. 1 is a diagram schematically illustrating an eyeglass-type video display device according to a first non-claimed example.
FIG. 2 is a diagram for describing visual recognition of video.
FIG. 3 is a diagram schematically illustrating a detailed configuration of a video output unit.
FIG. 4 is a diagram for describing diffusion by a screen.
FIG. 5 is diagram for describing visual recognition of video using a diffusion effect of the screen.
FIG. 6 is a diagram schematically illustrating an eyeglass-type video display device according to a comparative example.
FIG. 7 is a diagram illustrating an example video display of the eyeglass-type video display device according to the comparative example.
FIG. 8 is a diagram schematically illustrating an eyeglass-type video display device according to a second non-claimed example.
FIG. 9 is a diagram schematically illustrating an eyeglass-type video display device according to an embodiment.
FIG. 10 is a diagram illustrating a hardware configuration of a controller.

### Description of Embodiments

### First Example.

The following describes, with reference to the accompanying drawings, a first non-claimed example in detail. In the description of drawings, the same or equivalent components are denoted by the same reference numerals and redundant explanations are omitted.

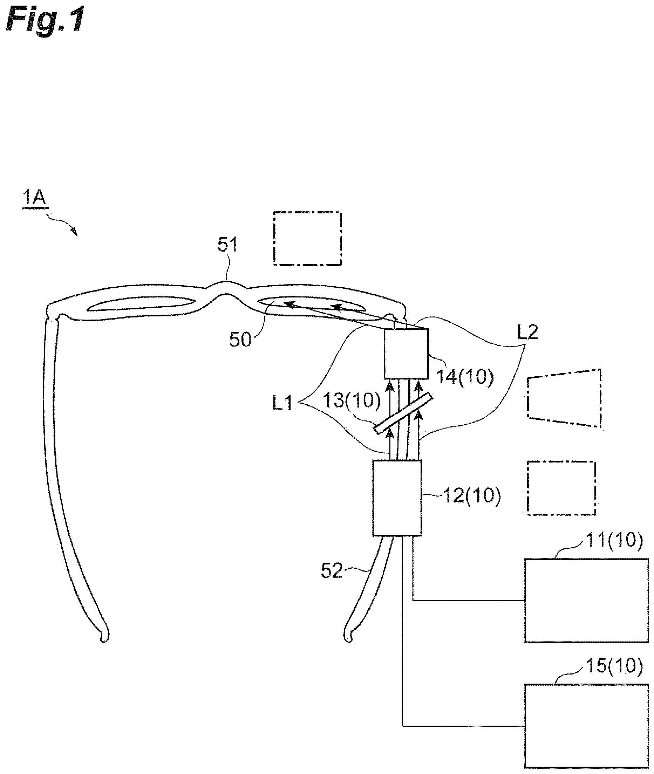

FIG. 1 is a diagram schematically illustrating an eyeglass-type video display device 1A according to the first example. The eyeglass-type video display device 1A is a display device configured to enable a user wearing eyeglasses (hereinafter referred to as simply "user") to visually recognize a video, by displaying the video (the image) on a lens surface of the eyeglasses. The eyeglass-type video display device 1A enables the user to visually recognize the video by causing video light (image light) emitted from video display units 10, mounted to temples 52 of the eyeglasses, to enter the pupils of the user.

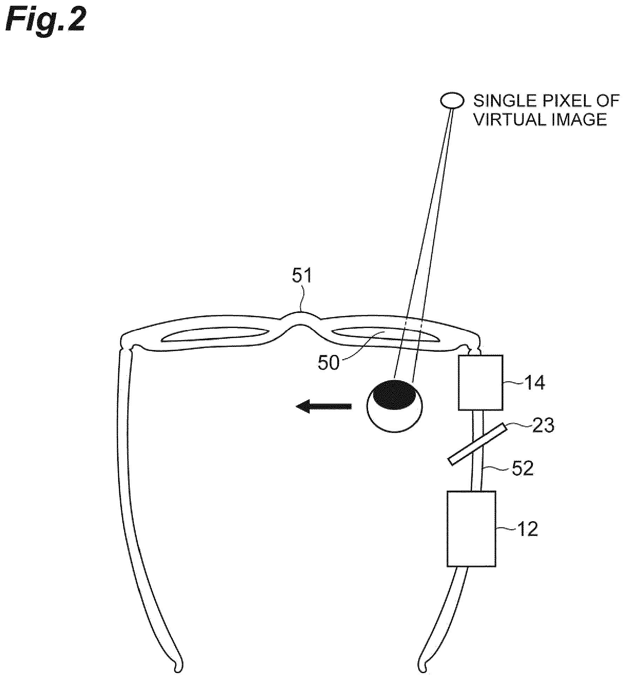

The eyeglass-type video display device 1A has a basic configuration of eyeglasses and, as illustrated in FIG. 1, includes components, such as a pair of lenses 50 corresponding to both eyes, a bridge 51 bridging between frames holding the lenses 50 for both eyes, and a pair of temples 52 extending from the frames holding the lens 50 for both eyes and kept on the temporal parts of the user. The lens 50 reflects at least a part of entered (projected) video light toward the pupil of the user. The video light reflected by the incident plane of the lens 50 forms an image as a virtual image viewed from the pupil (see FIG. 2). This enables the user to visually recognize the video. The lens 50 includes, for example, a thin optical member, such as a diffraction grating. Note that the eyeglass-type video display device 1A may include speakers (not illustrated) for outputting sound associated with the video, disposed on the positions corresponding to the ears of the user on the temples 52.

The eyeglass-type video display device 1A includes video display units 10. The video display unit 10 includes a content storage unit 11, a video output unit 12 (an image light output unit), a first optical member 13, a second optical member 14, and a controller 15. Of the components of the video display unit 10, at least the video output unit 12, the first optical member 13, and the second optical member 14 are arranged in line on the temple 52. In short, the video output unit 12, the first optical member 13, and the second optical member 14 are arranged in this order from the side away from the lens 50 on the temple 52. Note that although the eyeglass-type video display device 1A has the aforementioned components of the video display units 10 for both eyes, the following describes only the components corresponding to the right eye because the components for both eyes have the same function.

The content storage unit 11 is configured to store contents visually recognized by the user. The content visually recognized by the user is, in the present example, a video projected on the lens 50. The video is an image produced by refraction or reflection of light to be visually recognized by the user. Specifically, the contents visually recognized by the user are, for example, recorded TV programs or films, or the videos recorded by the user. The content storage unit 11, in the eyeglass-type video display device 1A, may be arranged on the temple 52 as with other components of the video display unit 10 or may be disposed away from the temple 52.

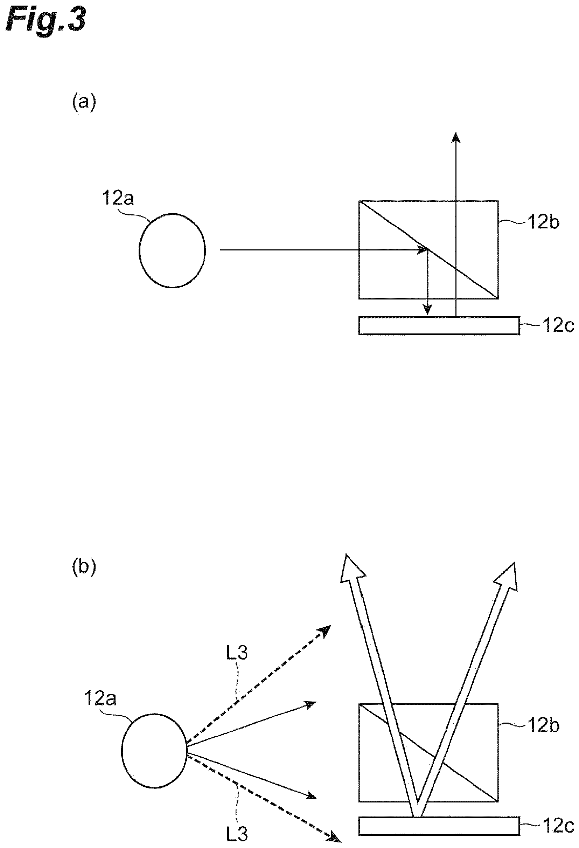

The video output unit 12 is configured to output video light (image light). The video light is a light including video information (image information). The video output unit 12 is configured to be able to obtain videos from the content storage unit 11 through a wired or wireless connection, and emits video light related to the video obtained from the content storage unit 11. As illustrated in FIG. 3(a), the video output unit 12 includes a light source 12a, a splitter 12b, and a display 12c.

The light source 12a outputs video light. The light source 12a is, for example, a laser light source such as a laser diode (LD), a light emitting diode (LED), or a lamp light source. The light source 12a may be a light source for outputting CW light or pulsed light as video light.

The splitter 12b is, for example, a polarization beam splitter (PBS) configured to transmit the light polarized to a particular direction and reflect the light polarized to the particular direction. The splitter 12b reflects, for example, the video light emitted from the light source 12a and transmitted through polarizers (not illustrated), toward the display 12c. In addition, the splitter 12b transmits the video light input after being reflected by the display 12c, toward the first optical member 13.

The display 12c receives radiation of the video light from the light source 12a via the splitter 12b and reflects (emits) the video light toward the first optical member 13. As a display, for example, a liquid crystal display, an organic EL display, or a liquid crystal on silicon display can be employed. Note that when an organic EL display and a transmissive liquid crystal display (with the use of backlights) are used, the aforementioned splitter 12b (a polarized beam splitter) may be omitted. Note that when a polarized beam splitter is omitted, the eyebox (the range within which the user can visually recognize the video even when moving his/her eyes (eyeballs)) depends on the diffusion angle of the light from backlights and the diffusion angle of the light of organic EL light emitting devices.

Turning back to FIG. 1, the first optical member 13 is configured to receive video light output from the video output unit 12 and emit the video light. More specifically, the first optical member 13 transmits the video light emitted from the display 12c toward the second optical member 14. The first optical member 13 includes a screen or a flyeye lens having fine lens pitch. As a screen, for example, a high-resolution screen used for a rear-production TV or the like can be employed. In the present example, the first optical member 13 is described to include a transmission diffusion screen for transmitting and diffusing video light output from the video output unit 12 (described in detail later). Note that a transmissive screen should transmit at least a part of the video light.

The first optical member 13 is arranged such that the incident plane thereof is inclined to the incident plane of the lens 50 so as to suppress the distortion of the video on the lens 50 caused by the video light projected in a direction oblique to the lens 50 from the second optical member 14. Specifically, the first optical member 13 is arranged such that the incident plane thereof is inclined to the incident plane of the lens 50, so that the video light having a longer distance from the second optical member 14 to the incident plane of the lens 50 has a shorter distance from the video output unit 12 to the incident plane of the first optical member 13. In short, as illustrated in FIG. 1, the video light L1, which is projected to the region close to the bridge 51 on the incident plane of the lens 50, has a longer distance from the second optical member 14 to the incident plane of the lens 50 than the video light L2, which is projected to the region close to the temple 52 on the incident plane of the lens 50. In this case, the first optical member 13 is arranged to be inclined to the incident plane of the lens 50 so that the distance of the video light L1 from the video output unit 12 to the incident plane of first optical member 13 becomes shorter than that of the video light L2.

As described above, in the present example, the first optical member 13 includes a transmission diffusion screen for transmitting and diffusing video light output from the video output unit 12. The following describes effects achieved when a transmission diffusion screen is used.

FIG. 2 is a diagram for describing visual recognition of video by a user. In the configuration illustrated in FIG. 2, a non-diffusional screen 23 (or a flyeye lens) is employed. In a state where video light is projected to the lens 50, the user visually recognizes the video by seeing a virtual image through the lens 50. As illustrated in FIG. 2, the angle of the light spread from a single pixel of the virtual image has a limit, and thus the user can visually recognize the virtual image only within the range that the light enters the user's eye.

As described above, the video light visually recognized by the user is the light emitted from the display 12c after being output from the light source 12a and reflected by the splitter 12b in the video output unit 12 (see FIG. 3(a)). Here, by widening the angle of the light spread from a single pixel of the virtual image, the user can easily visually recognize the light of the virtual image even when moving his/her eyes (the eyebox can be enlarged). The angle of the light spread from the single pixel can be widened by widening the angle of the light irradiated to the display 12c. The angle of the light irradiated to the display 12c can be widened by widening the angle of the light output from the light source 12a. However, as illustrated in FIG. 3(b), out of the light output from the light source 12a, the video light L3, which does not fall within the arrangement range of the splitter 12b, is not reflected to the display 12c side and thus does not contribute to widening the angle of the light of a single pixel of the virtual image. In short, widening the angle of the light of the virtual image by widening the diffusion angle of the light output from the light source 12a has a limit (the limit according to the size of the splitter 12b).

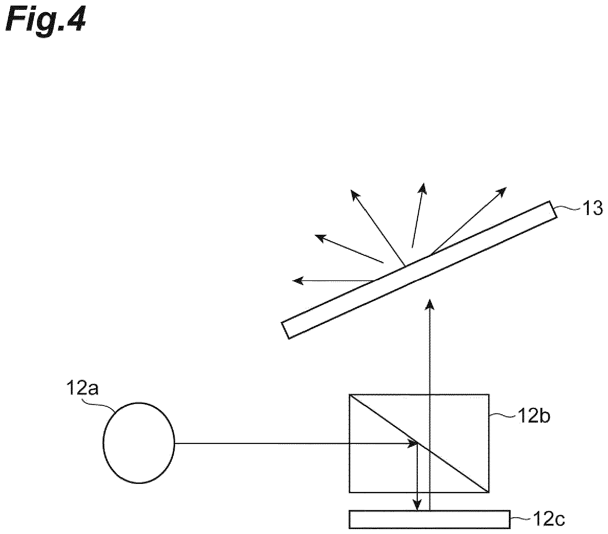

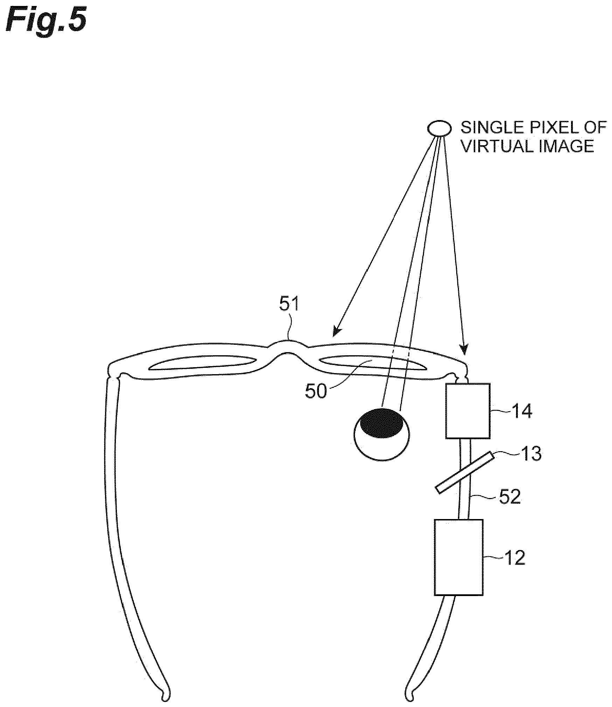

In this respect, in the present example, the video light emitted from the display 12c in the video output unit 12 is received by the transmission diffusion screen of the first optical member 13. As illustrated in FIG. 4, the transmission diffusion screen of the first optical member 13 functions as a diffuser panel and diffuses the light emitted from the display 12c in different directions. Accordingly, as illustrated in FIG. 5, when the video light is projected to the lens 50 through the first optical member 13 and the second optical member 14, the angle of the light spread from a single pixel of the virtual image becomes larger than that of the configuration in FIG. 2, and thus the user can easily visually recognize the virtual image even when moving his/her eyes.

Turning back to FIG. 1, the second optical member 14 is configured to receive video light emitted from (transmitted through) the first optical member 13 and project the video light in a direction oblique to the incident plane of the lens 50. The second optical member 14 should be an optical member configured to two-dimensionally change the angle of the video light emitted from the first optical member 13 toward the lens 50, examples of which include various lenses, a galvano-mirror scanner, a polygon mirror scanner, and a MEMS mirror scanner. The second optical member 14 may be a combination of the aforementioned various lenses and mirrors. In addition, the second optical member 14 may not change the angle of the video light physically, and may be a polarizer, such as an AO device (an acousto-optical device) or an EO device (an electro-optical conversion device).

The controller 15 is a circuit configured to perform various controls. The hardware configuration of the controller 15 is described later. The controller 15, for example, outputs a predetermined control signal to the video output unit 12 so that the video output unit 12 obtains a video from the content storage unit 11 and emits video light.

Next, functional effects of the eyeglass-type video display device 1A according to the first example are described.

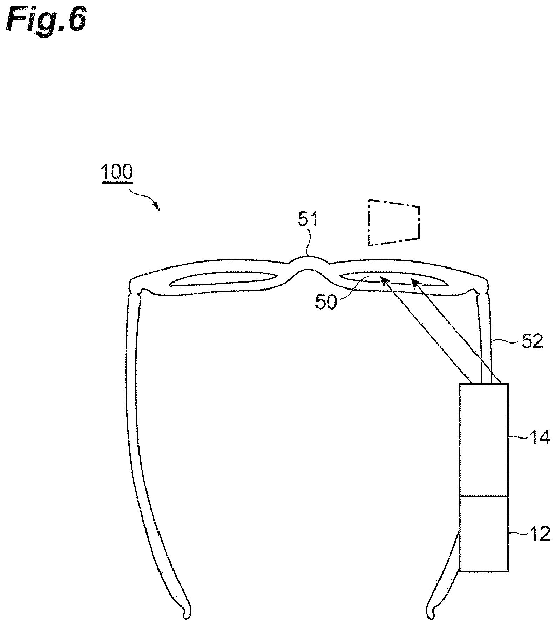

As with the eyeglass-type video display device 100 according to a comparative example illustrated in FIG. 6, when a video is obliquely projected from a side of the temple 52 to the incident plane of the lens 50 of the eyeglasses, the video light projected to the region close to the bridge 51 on the incident plane of the lens 50 has a longer distance from the second optical member 14 to the incident plane of the lens 50 than the video light projected to the region close to the temple 52 on the incident plane of the lens 50. This forms the video projected to the incident plane of the lens 50 into a trapezoidal shape having a long side on the side close to the bridge 51 and a short side on the side close to the temple 52, resulting in trapezoidal distortion.

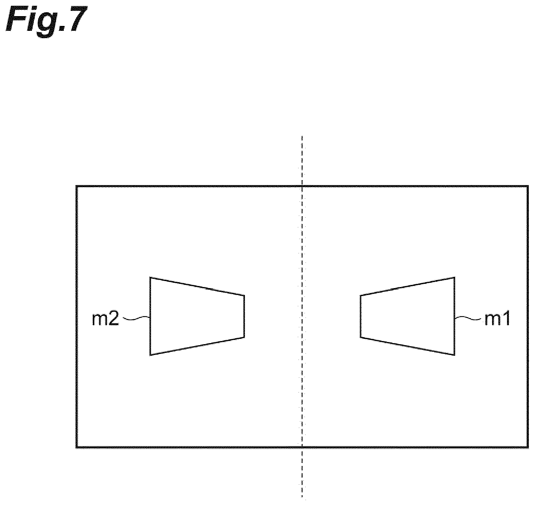

As an aspect for suppressing the trapezoidal distortion, for example, a configuration of an adjustment by the second optical member 14 is conceivable. However, in order to suppress the trapezoidal distortion with only an adjustment by the second optical member 14 configured to project the video light in a direction oblique to the incident plane of the lens 50, the second optical member 14 needs to be enlarged. This is unreal for the configuration of the eyeglass-type video display device to be compact. Moreover, a configuration is conceivable in which a video (a content) output from the video output unit 12 is pre-corrected to an inverted trapezoid using software, so that the distortion of the image projected to the incident plane of the lens 50 is suppressed in the end. However, the need for such software correction increases CPU usage, thereby increasing electricity consumption. In addition, separate image correction is required for each of the right and left eyes. Thus, a separate video processing system is required for each of the right and left, or, as illustrated in FIG. 7, one video will be output as a divided video for the right eye, m1, and a divided video for the left eye, m2, which decreases resolution of the video.

In this respect, the eyeglass-type video display device 1A according to the present embodiment, as illustrated in FIG. 1, is a device configured to display a video on the incident plane of the lens 50 of the eyeglasses, and includes the video output unit 12 configured to output video light, the first optical member 13 configured to receive video light output from the video output unit 12 and emit the video light, and the second optical member 14 configured to receive video light emitted from the first optical member 13 and project the video light in a direction oblique to the incident plane of the lens 50, wherein the incident plane of the first optical member 13 is arranged to be inclined to the incident plane of the lens 50 so as to suppress the distortion of the video on the incident plane of the lens 50 caused by the video light projected in a direction oblique to the incident plane of the lens 50 from the second optical member 14.

In the eyeglass-type video display device 1A according to the present example, video light is obliquely projected from the second optical member 14 to the incident plane of the lens 50 of the eyeglasses. As described above, when images are obliquely projected to the incident plane of the lens 50 of the eyeglasses, distortion (trapezoidal distortion) is caused in the image projected on the incident plane of the lens 50. In this respect, the eyeglass-type video display device 1A according to the present example is provided with the first optical member 13 configured to emit video light output from the video output unit 12 toward the second optical member 14, and the first optical member 13 is arranged oblique to the direction for suppressing the aforementioned trapezoidal distortion with respect to the incident plane of the lens 50. In short, the first optical member 13 is arranged to be inclined such that the video is formed in, for example, an inverted trapezoid (a trapezoid in which the long side of the trapezoidal distortion is inversed to the short side), to suppress the trapezoidal distortion. As such, before the second optical member 14 receives the video light, the first optical member 13 forms a video to suppress the trapezoidal distortion. Thus, the distortion of the video on the incident plane of the lens 50 is suppressed and the video can be displayed properly on the incident plane of the lens 50. Furthermore, because the configuration where the video output from the video output unit 12 is pre-formed in an inverted trapezoid is achieved by arranging the first optical member 13, instead of using software, the issue does not arise that software pre-correction increases power consumption and a simple configuration can achieve suppression of trapezoidal distortion.

Specifically, the first optical member 13 is arranged such that the incident plane thereof is inclined to the incident plane of the lens 50, so that the video light having a longer distance from the second optical member 14 to the incident plane of the lens 50 has a shorter distance from the video output unit 12 to the incident plane of the first optical member 13 (see the video light L1 and L2 in FIG. 1). This configuration can reliably form the inverted trapezoid-shaped image described above and properly display the image on the incident plane of the lens 50.

In addition, the first optical member 13 includes a transmission diffusion screen for transmitting and diffusing video light output from the video output unit 12. As described above, if a virtual image, which the user visually recognizes through the incident plane of the lens 50 of the eyeglasses, has a narrow angle spreading from its single pixel (see FIG. 2), the user will be unable to visually recognize the virtual image as the user slightly moves his/her eyes. In this respect, with the configuration where the first optical member 13 transmits and diffuses video light, the angle spread from a single pixel of the virtual image described above can be widened (see FIG. 5) and thus the user can easily virtually recognize the virtual image even when moving his/her eyes.

### Second Example

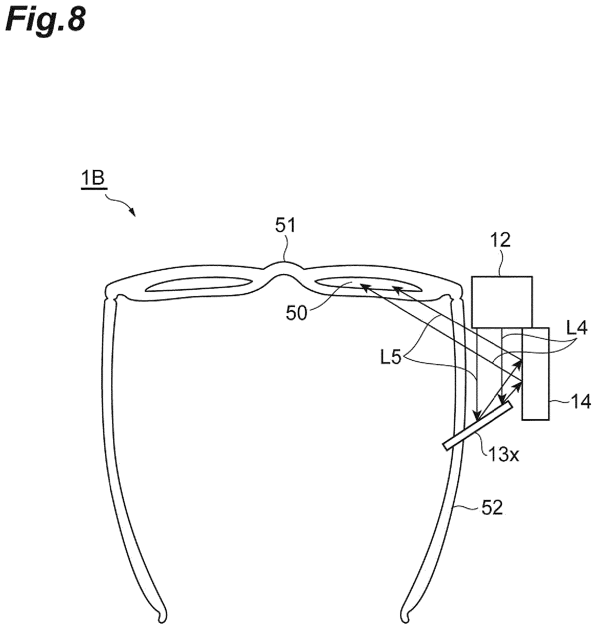

Next, with reference to FIG. 8, an eyeglass-type video display device 1B according to a second non-claimed example is described. Note that the description of the present example mainly describes differences from the foregoing first embodiment, and the content storage unit 11 and the controller 15 having a similar configuration as in the first example are not illustrated in FIG. 8.

As illustrated in FIG. 8, the eyeglass-type video display device 1B includes a first optical member 13x, instead of the first optical member 13 of the eyeglass-type video display device 1A in the first example The first optical member 13x includes a reflective screen for reflecting video light output from the video output unit 12 toward the second optical member 14. Note that the reflective screen should reflect at least a part of the video light.

In the eyeglass-type video display device 1B, for example, the first optical member 13x and the video output unit 12 are arranged in line along the extending direction of the temple 52 and the second optical member 14 is arranged on the outer side of the first optical member 13x. In addition, in the extending direction of the temple 52, the video output unit 12, the second optical member 14, and the first optical member 13 are arranged in this order from the side close to the lens 50.

In such an eyeglass-type video display device 1B, a reflective screen of the first optical member 13x reflects video light output from the video output unit 12. The second optical member 14, such as a mirror, then reflects the image projected to the reflective screen of the first optical member 13x toward the lens 50 to project the video light on the incident plane of the lens 50. As in the first example, the first optical member 13x is arranged such that the incident plane thereof is inclined to the incident plane of the lens 50, so that the video light having a longer distance from the second optical member 14 to the incident plane of the lens 50 has a shorter distance from the video output unit 12 to the incident plane of the first optical member 13x. In short, as illustrated in FIG. 8, the video light L4 projected to the region close to the bridge 51 on the incident plane of the lens 50 has a longer distance from the second optical member 14 to the incident plane of the lens 50 than the video light L5 projected to the region close to the temple 52 on the incident plane of the lens 50. In this case, the first optical member 13x is arranged to be inclined to the incident plane of the lens 50 so that the distance of the video light L4 from the video output unit 12 to the incident plane of first optical member 13x becomes shorter than that of the video light L5.

In the eyeglass-type video display device 1A in the first example, the first optical member 13 having a transmissive screen is used and respective components are arranged in line on the temple 52 (see FIG. 1). In contrast, in the eyeglass-type video display device 1B in the present example, the first optical member 13x having a reflective screen is used, and the first optical member 13x and the video output unit 12 are arranged in line along the extending direction of the temple 52 and the second optical member 14 is arranged on the outer side of the first optical member 13x (see FIG. 8). As such, the case of a transmissive screen and the case of a reflective screen are different in arrangement of components. Thus, depending on a structure required for the eyeglass-type video display device to be used, by properly using a transmissive screen and a reflective screen, eyeglass-type video display devices having different structures can employ the configuration according to an aspect of the present invention.

### Embodiment

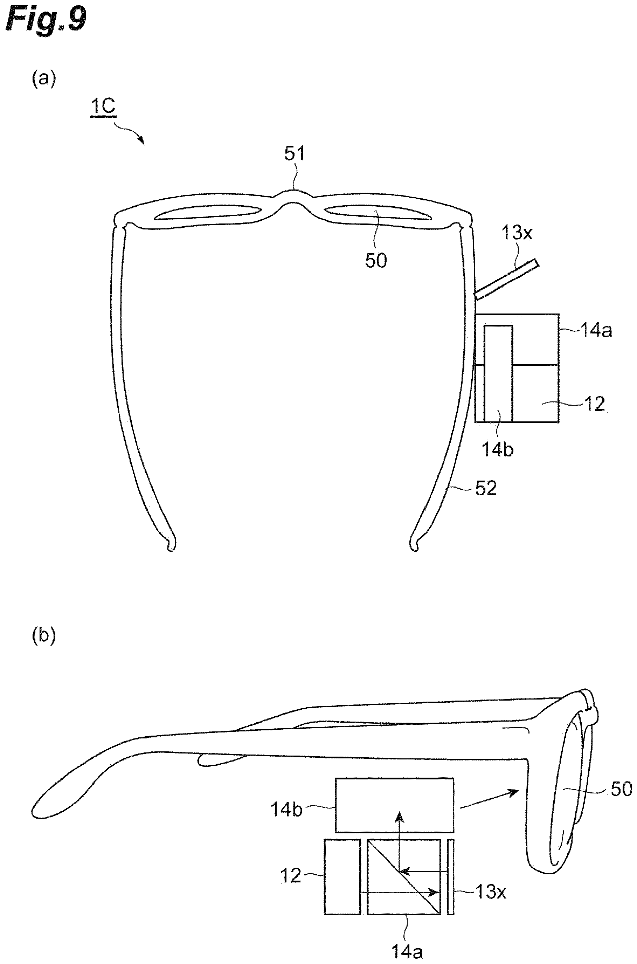

Next, with reference to FIG. 9(a) and FIG. 9(b), an eyeglass-type video display device 1C according to an embodiment is described. Note that the description of the present embodiment mainly describes differences from the foregoing first and second examples, and the content storage unit 11 and the controller 15 having a similar configuration as in the first and second examples are not illustrated in FIG. 9.

As illustrated in FIG. 9(a) and FIG. 9(b), the eyeglass-type video display device 1C includes the first optical member 13x having a reflective screen, as with the eyeglass-type video display device 1B in the second example. The eyeglass-type video display device 1C includes a splitter 14a and a mirror 14b making up a second optical member, instead of the second optical member 14 of the eyeglass-type video display devices 1A and 1B in the first and second examples.

In the eyeglass-type video display device 1C, for example, the mirror 14b is arranged under the temple 52. In addition, under the mirror 14b, the first optical member 13x, the splitter 14a, and the video output unit 12 are arranged in this order from the side close to the lens 50 in the extending direction of the temple 52.

In such an eyeglass-type video display device 1C, video light output from the video output unit 12 transmits through the splitter 14a toward the first optical member 13x and is reflected by the reflective screen of the first optical member 13x toward the splitter 14a. The splitter 14a then reflects the video light toward the mirror 14b (i.e., upward) and the mirror 14b projects the video light to the incident plane of the lens 50. As in the first and second examples, the first optical member 13x is arranged such that the incident plane thereof is inclined to the incident plane of the lens 50, so that the video light having a longer distance from the mirror 14b, making up the second optical member, to the incident plane of the lens 50 has a shorter distance from the video output unit 12 to the incident plane of the first optical member 13x.

In the eyeglass-type video display device 1C in the present embodiment, the mirror 14b is disposed at a different level from other components. This configuration enables the components to be compactly arranged in the extending direction of the temple 52, compared with the eyeglass-type video display devices 1A and 1B in the first and second embodiments.

Note that means for implementing the controller 15 is not particularly limited. That is, the controller 15 may be implemented by a single device physically and/or logically combined, or may be implemented by two or more devices that are physically and/or logically separated and are connected directly and/or indirectly (for example, in a wired and/or wireless manner).

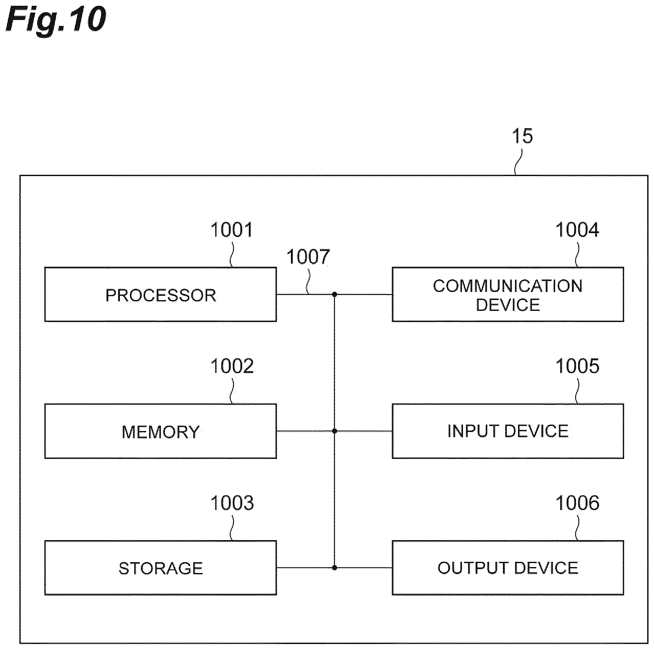

FIG. 10 is a diagram illustrating an example of a hardware configuration of the controller 15.

The aforementioned controller 15 may be physically configured as a computer device including a processor 1001, a memory 1002, a storage 1003, a communication device 1004, an input device 1005, an output device 1006, and a bus 1007, and the like.

When predetermined software (program) is loaded on hardware such as the processor 1001 and the memory 1002, the processor 1001 performs calculation and controls communication by the communication device 1004 and controls reading from and/or writing to the memory 1002 and the storage 1003. In this manner, each function in the controller 15 is implemented.

The processor 1001, for example, operates an operating system to control the entire computer. The processor 1001 may be include a central processing unit (CPU) including an interface with a peripheral device, a control device, an arithmetic unit, registers, and the like.

In addition, the processor 1001 executes various processes according to a program (program code), a software module, and data that have been loaded from the storage 1003 and/or the communication device 1004 to the memory 1002 by the processor 1001. As the program, programs for causing the computer to execute at least part of the operations described in the aforementioned first and second examples and the embodiment are used. For example, the functions of the controller 15 may be implemented by a control program that is stored in the memory 1002 and configured to be operated on the processor 1001. Other functional blocks may be implemented in the same manner. An example in which the aforementioned various processes are executed by the single processor 1001 has been described, but the processes may be executed simultaneously or sequentially by two or more processors 1001. The processor 1001 may be implemented by at least one chip. Note that the program may be transmitted from the network through an electric communication line.

The memory 1002 is a computer-readable storage medium and, for example, may consist of at least one of a read only memory (ROM), an erasable programmable ROM (EPROM), an electrically erasable programmable ROM (EEPROM), a random access memory (RAM), and the like. The memory 1002 may be referred to as a register, a cache, a main memory (main storage device) or the like. The memory 1002 can store a program (program code), a software module, and the like that are executable to execute the aforementioned first and second examples and the embodiment.

The storage 1003 is a computer-readable storage medium and may consist of, for example, at least one of an optical disc, such as a compact disc ROM (CD-ROM), a hard disk drive, a flexible disk, a magnetic optical disc (for example, a compact disc, a digital versatile disc, and a Blu-ray (registered trademark) disc), a smart card, a flash memory (for example, a card, a stick, and a key drive), a floppy (registered trademark) disk, or a magnetic strip. The storage 1003 may be referred to as an auxiliary storage device. The aforementioned storage medium may be, for example, a database or a server including the memory 1002 and/or the storage 1003 or any other appropriate medium.

The communication device 1004 is hardware (a transceiver device) for communication over computers through a wired and/or a wireless network and is, for example, also referred to as a network device, a network controller, a network card, or a communication module.

The input device 1005 is an input device for receiving external inputs (for example, a keyboard, a mouse, a microphone, a switch, a button, or a sensor). The output device 1006 is an output device for providing external outputs (for example, a display, a speaker, or an LED lamp). Note that the input device 1005 and the output device 1006 may have a unitary structure (for example, a touch panel).

Each of the devices such as the processor 1001 and the memory 1002 is connected to other devices through the bus 1007 for communicating information. The bus 1007 may consist of a single bus or different buses among the devices.

In addition, the controller 15 may include hardware, such as a macro processor, a digital signal processor (DSP), an application specific integrated circuit (ASIC), a programmable logic device (PLD), and a field programmable gate array (FPGA). Part or all of the functional blocks may be implemented by the hardware. For example, the processor 1001 may be implemented by at least one of the pieces of hardware.

An aspect of the invention has been described above in detail.

For example, as an example of an eyeglass-type image device, the eyeglass-type video display devices 1A to 1C have been described, and it has been described that the eyeglass-type video display devices 1A to 1C are configured to display a video on the lens surface of the eyeglasses, but the eyeglass-type image device according to an aspect of the present invention may display an image (for example, a static image) other than a video on the lens surface.

The processing procedures or the like in the first and second examples and the embodiment described in the present description may change the order of steps, as long as there is no inconsistency. For example, for the methods described in the present description, various elements of the steps are presented in an exemplary order, and the methods disclosed herein are not limited to the presented specific order.

Information or the like that has been input thereto or output therefrom may be stored in a certain location (for example, a memory) and/or managed in a management table. Information or the like that has been input thereto or output therefrom may be overwritten and updated, or additional items may be added thereto. Information or the like that has been output therefrom may be deleted. Information or the like that has been input thereto may be transmitted to the other devices.

Determination may be made with a one-bit value (0 or 1), a Boolean value (true or false) or numerical comparison (for example, comparison with a predetermined value).

Notification of predetermined information (for example, notification of "being X") is not limited to being performed explicitly. The notification of predetermined information may be performed implicitly (for example, not notifying the predetermined information).

Software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, or other terms, regardless of whether the software is referred to as software, firmware, middleware, a microcode, a hardware descriptive language, or other names.

The software, the instructions, and the like may be transmitted and received through a transmission medium. For example, when the software is transmitted from a website, a server, or other remote sources using wired techniques such as a coaxial cable, an optical fiber cable, a twisted-pair cable, or a digital subscriber line (DSL), and/or wireless techniques such as infrared, radio waves, or microwaves, these wired techniques and/or the wireless techniques are included in the definition of the transmission medium.

The information, the signals, and other items described in the present description may be represented with any various different techniques. For example, data, an instruction, a command, information, a signal, a bit, a symbol, and a chip which can be mentioned throughout the aforementioned description may be represented with a voltage, a current, an electromagnetic wave, a magnetic field or magnetic particles, an optical field or photons, or any combination thereof.

Note that the terms described in the present description and/or the terms required for understanding the present description may be substituted with terms having the same or similar meanings.

The terms "system" and "network" used in the present description are compatibly used.

In addition, information, parameters, and the other items described in the present description may be represented with absolute values, relative values to a predetermined value, or other corresponding information.

The names used for the aforementioned parameters are not restrictive in any viewpoint. Furthermore, the formulae and the like using the parameters may differ from those explicitly disclosed in the present description.

The terms "connected" and "coupled", or all modifications thereof refer to all direct or indirect connections or coupling between two or more elements and can include a case in which one or more intermediate elements are present between two elements "connected" to each other or "coupled" each other. The coupling and connecting of elements may be physical or may be logical, or may be a combination thereof. In the present description, two elements can be considered to be "connected" to each other or "coupling" each other by using one or more electric wires, cables, and/or printed electric connections as well as by using electromagnetic energy, such as electromagnetic energy having wavelengths in a radio frequency area, a microwave area, and a light (both visible light and invisible light) area as some non-restrictive and non-comprehensive examples.

The expression "based on" used in the present description does not mean "only based on", unless specifically stated otherwise. In other words, the expression "based on" means both "only based on" and "at least based on".

Any reference to elements having names such as "first" and "second" used in the present description does not generally limit amounts or an order of the elements. The names can be conveniently used to distinguish two or more elements in the present description. Accordingly, reference to first and second elements does not mean that only two elements are employed or that the first element has to be prior to the second element in any form.

As long as the terms "including" and "comprising", and modifications thereof are used in the present description or the appended claims, the terms are intended to have a comprehensive meaning similar to the term "comprise". Furthermore, the term "or" used in the present description or the appended claims is intended not to be exclusive OR.

In the present description, unless it is indicated that there is only one device contextually or technically obviously, it is intended to include a plurality of devices.

### Reference Signs List

1A, 1B, 1C... eyeglass-type video display device (eyeglass-type image display device), 12... video output unit (image light output unit), 13, 13x... first optical member, 14... second optical member, 50... lens

## Claims

1. An eyeglass-type image display device (1C) configured to display an image on a lens (50) surface of eyeglasses, the eyeglass-type image display device (1C) comprising:
an image light output unit (12) configured to output image light including image information;
a first optical member (13x) configured to receive the image light output indirectly from the image light output unit (12) through a splitter (14a); and
a second optical member (14) configured to receive the image light emitted from the first optical member (13x) and project the image light in a direction oblique to the lens (50) surface;
wherein an incident plane of the first optical member (13x) is arranged to be inclined to the lens (50) surface so as to suppress distortion of an image on the lens (50) surface caused by the image light projected in the direction oblique to the lens (50) surface from the second optical member (14), **characterized in that**:
the first optical member (13x) is a single optical member configured to emit the image light in an inverted trapezoidal shape,
wherein the first optical member (13x) is arranged such that the incident plane is inclined to the lens (50) surface so that image light having a longer distance from the second optical member (14) to the lens (50) surface has a shorter distance from the image light output unit (12) to the incident plane,
wherein the first optical member (13x) comprises a reflective screen for reflecting the image light output from the image light output unit (12) toward the splitter (14a),
wherein the splitter (14a) reflects the image light from the first optical member (13x) to a mirror (14b),
wherein the second optical member (14) comprises the splitter (14a) and the mirror (14b).

## Patentansprüche

1. Eine brillenartige Bildanzeigevorrichtung (1C), die eingerichtet ist, ein Bild auf einer Oberfläche einer Linse (50) von Brillen anzuzeigen, die brillenartige Bildanzeigevorrichtung (1C) aufweisend:
eine Bildlicht-Ausgabeeinheit (12), die eingerichtet ist, Bildlicht, das Bildinformationen aufweist, auszugeben;
ein erstes optisches Element (13x), das eingerichtet ist, das ausgegebene Bildlicht mittels eines Teilers (14a) indirekt von der Bildlicht-Ausgabeeinheit (12) zu empfangen; und
ein zweites optisches Element (14), das eingerichtet ist, das von dem ersten optischen Element (13x) ausgesendete Bildlicht zu empfangen und das Bildlicht in eine Richtung schräg zu der Oberfläche der Linse (50) zu projizieren;
wobei eine Einfallsebene des ersten optischen Elements (13x) geneigt zu der Oberfläche der Linse (50) angeordnet ist, so dass eine Verzerrung eines Bildes auf der Oberfläche der Linse (50), die durch das von dem zweiten optischen Element (14) in die Richtung schräg zu der Oberfläche der Linse (50) projizierte Bildlicht verursacht wird, unterdrückt wird, **dadurch gekennzeichnet, dass**:
das erste optische Element (13x) ein einzelnes optisches Element ist, das eingerichtet ist, das Bildlicht in einer umgekehrten Trapezform auszusenden,
wobei das erste optische Element (13x) derart angeordnet ist, dass die Einfallsebene zu der Oberfläche der Linse (50) geneigt ist, so dass Bildlicht, das einen längeren Weg von dem zweiten optischen Element (14) zu der Oberfläche der Linse (50) hat, einen kürzeren Weg von der Bildlicht-Ausgabeeinheit (12) zu der Einfallsebene hat,
wobei das erste optische Element (13x) einen reflektierenden Schirm zum Reflektieren des von der Bildlicht-Ausgabeeinheit (12) ausgegebenen Bildlichtes in Richtung des Teilers (14a) aufweist,
wobei der Teiler (14a) das Bildlicht von dem ersten optischen Element (13x) zu einem Spiegel (14b) reflektiert,
wobei das zweite optische Element (14) den Teiler (14a) und den Spiegel (14b) aufweist.

## Revendications

1. Dispositif d'affichage d'image de type lunettes (1C) configuré pour afficher une image sur une surface de verre (50) des lunettes, le dispositif d'affichage d'image de type lunettes (1C) comprenant :
une unité de sortie de lumière d'image (12) configurée pour fournir en sortie de la lumière d'image comportant des informations d'image ;
un premier organe optique (13x) configuré pour recevoir la lumière d'image fournie en sortie indirectement depuis l'unité de sortie de lumière d'image (12) à travers un séparateur (14a) ; et
un deuxième organe optique (14) configuré pour recevoir la lumière d'image émise depuis le premier organe optique (13x) et projeter la lumière d'image dans une direction oblique à la surface de verre (50) ;
dans lequel un plan d'incidence du premier organe optique (13x) est agencé pour être incliné par rapport à la surface de verre (50) de façon à supprimer une distorsion d'une image sur la surface de verre (50) provoquée par la lumière d'image projetée dans la direction oblique à la surface de verre (50) depuis le deuxième organe optique (14), **caractérisé en ce que** :
le premier organe optique (13x) est un organe optique unique configuré pour émettre la lumière d'image sous une forme trapézoïdale inversée,
dans lequel le premier organe optique (13x) est agencé de sorte que le plan d'incidence soit incliné par rapport à la surface de verre (50) de façon à ce que de la lumière d'image ayant une distance plus longue du deuxième organe optique (14) à la surface de verre (50) ait une distance plus courte de l'unité de sortie de lumière d'image (12) au plan d'incidence,
dans lequel le premier organe optique (13x) comprend un écran réfléchissant destiné à réfléchir la lumière d'image fournie en sortie depuis l'unité de sortie de lumière d'image (12) vers le séparateur (14a),
dans lequel le séparateur (14a) réfléchit la lumière d'image du premier organe optique (13x) à un miroir (14b),
dans lequel le deuxième organe optique (14) comprend le séparateur (14a) et le miroir (14b).
